# FASCICULE DE BREVET EUROPEEN

(11) **EP 0 343 706 B1**
(45) Date de publication et mention de la délivrance du brevet: **18.08.1993**
(21) Numéro de dépôt: 89201197.4
(22) Date de dépôt: 12.05.1989
(51) Int. Cl.: C08G 71/02, C08F 2/00

(54) **Polythiourées, procédé pour leur fabrication et utilisation de ces polythiourées pour éviter ou réduire le croûtage des réacteurs de polymérisation**
Polythioharnstoffe, Verfahren zu ihrer Herstellung und Verwendung dieser Polythioharnstoffe zur Verhinderung oder Herabsetzung der Krustenbildung von Polymerisationsreaktoren
Polythioureas, process for their preparation and use of these polythioureas to prevent or reduce the crustforming of polymerisation reactors

(30) Priorité: 24.05.1988 FR 8807059
(43) Date de publication de la demande: 29.11.1989
(73) Titulaire: SOLVAY (Société Anonyme), B-1050 Bruxelles (BE)
(72) Inventeur: Walraevens, René, B-1080 Bruxelles (BE); Coisne, Jean-Marc, B-1050 Bruxelles (BE); Strebelle, Michel, B-1150 Bruxelles (BE)
(74) Mandataire: Nichels, William

(56) Documents cités:
- EP-A- 0 091 965
- DE-B- 1 046 310
- DE-C- 1 042 892
- US-A- 4 613 483

## Description

La présente invention concerne des nouvelles polythiourées utilisables pour éviter le croûtage de réacteurs de polymérisation ainsi qu'un procédé pour la fabrication de ces composés.

Les composés polythiourées selon l'invention répondent à la formule générale :

⁅NH-R-NH-CS⁆ₙ (A)

dans laquelle :
- R représente un groupement aromatique substitué par au moins un groupement carboxyle, et
- n représente un nombre entier compris entre 2 et 300.

Par groupement aromatique substitué par au moins un groupement carboxyle, on entend généralement les dérivés benzéniques éventuellement substitués par un ou plusieurs groupements alkyles, tels que le méthyle ou l'éthyle.

Par groupement carboxyle, on entend les groupements de formule -CO₂H, les sels alcalins ou alcalino-terreux qui en dérivent, tels que -CO₂Na et -CO₂K.

De manière préférée, R représente un groupement benzénique substitué par un groupement carboxyle, tel que -CO₂H et -CO₂Na.

Les polythiourées selon l'invention peuvent se présenter sous forme d'isomères divers et notamment sous forme d'isomères de position.

Les polythiourées préférées selon l'invention répondent aux formules suivantes : 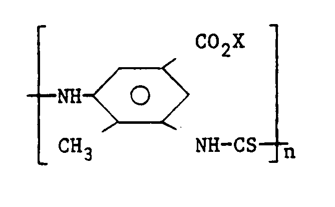 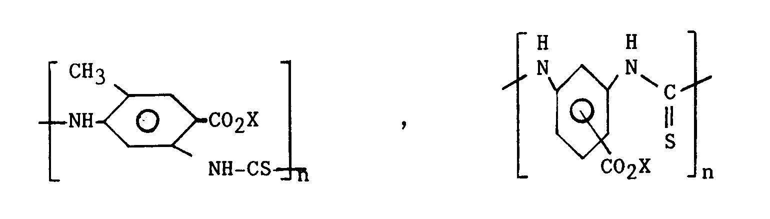
dans laquelle X représente un atome d'hydrogène ou un atome de sodium et n un nombre entier compris entre 2 et 200.

Les polythiourées particulièrement préférées possèdent une structure de formule : 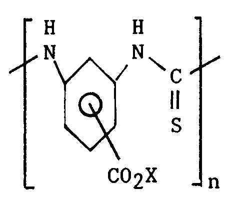
dans laquelle X représente un atome d'hydrogène ou un atome de sodium et n un nombre entier compris entre 2 et 100.

Les polythiourées tout particulièrement préférées selon l'invention répondent à la formule : 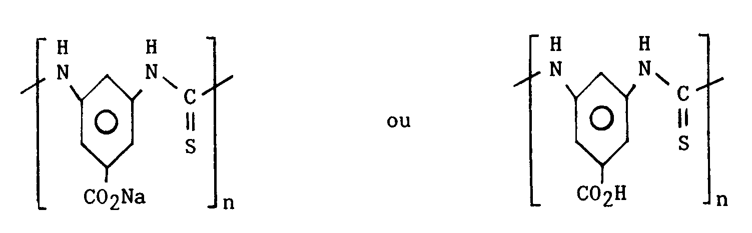
dans laquelle n est un nombre entier compris entre 2 et 50 et, de préférence, entre 2 et 30.

Le nombre n, qui représente le degré de polymérisation, peut être déterminé par toute méthode physique ou chimique connue. Dans la présente demande, le nombre n a été déterminé par la méthode de l'analyse élémentaire d'azote et de soufre.

Les polythiourées selon l'invention peuvent être préparées par toute synthèse organique appropriée regroupant des réactions connues et s'appliquant de façon générale ou de façon particulière à un seul composé ou à une famille de composés.

Un procédé intéressant pour la préparation des polythiourées selon l'invention consiste à faire réagir une diamine, de formule générale NH₂-R-NH₂ dans laquelle R représente les groupements cités précédemment pour la formule (A), et le thiophosgène CSCl₂.

La réaction peut s'effectuer éventuellement en présence d'un solvant, tel que le tétrachlorure de carbone.

La réaction peut également s'effectuer en présence d'un hydroxyde d'un métal alcalin ou alcalino-terreux, tel que l'hydroxyde de sodium ou de potassium et, dans ce cas, le procédé selon l'invention comprend les étapes suivantes :
(1) réaction de la diamine et de l'hydroxyde de sodium : 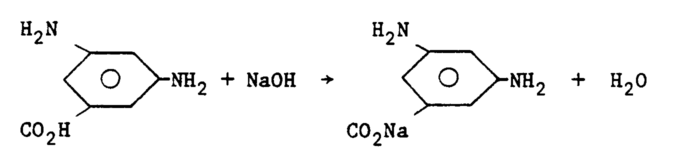
(2) réaction du produit obtenu en (1) avec le thiophosgène :

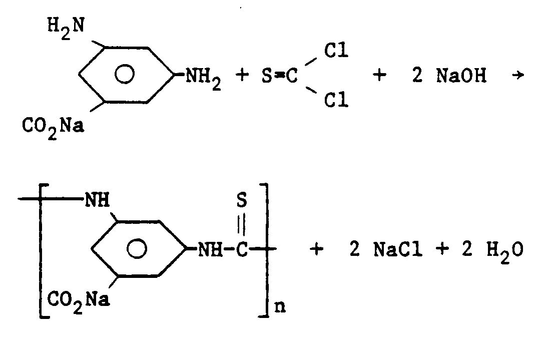

Un autre procédé consiste à transformer des polyurées, issues de la réaction d'une diamine et de phosgène, en polythiourées correspondantes ou à synthétiser les polythiourées par l'intermédiaire des diisothiocyanates ou des isothiocyanates.

Les polythiourées de l'invention sont utilisables comme intermédiaires de synthèse chimique, comme composés permettant d'éviter le croûtage des réacteurs et des autoclaves, notamment ceux utilisés pour la polymérisation du chlorure de vinyle, et des oléfines, tels que l'éthylène et le propylène.

Les polythiourées selon l'invention sont mises en oeuvre tout particulièrement dans les réacteurs utilisés pour la polymérisation du chlorure de vinyle.

Par polymérisation du chlorure de vinyle, on entend l'homopolymérisation du chlorure de vinyle ainsi que la copolymérisation d'un mélange de monomères à teneur prépondérante en chlorure de vinyle, tels que par exemple les mélanges de chlorure de vinyle et d'acétate de vinyle, respectivement de propylène ou d'éthylène.

Les polythiourées selon l'invention peuvent être mises en oeuvre dans toutes les techniques usuelles de polymérisation de monomères éthyléniques et notamment, dans la polymérisation en masse, en solution ou en dispersion aqueuse. De préférence, toutefois, elles sont mises en oeuvre dans les cas de polymérisations en suspension aqueuse et en émulsion aqueuse qui sont réalisées en présence des ingrédients usuels.

Toutes ces techniques de polymérisation donnent lieu à la formation sur les parois des réacteurs de polymérisation de croûtes constituées de sous-produits inutilisables. Ces croûtes sont constituées de dépôts solides de polymère et adhèrent fortement aux surfaces internes des réacteurs (cuves, agitateurs, déflecteurs, ...). On désigne généralement ce phénomène sous le nom de "croûtage". La présence des croûtes est hautement indésirable, elles contaminent le polymère fabriqué dans les cycles ultérieurs, elles réduisent la capacité de transfert de chaleur de la paroi du réacteur et elles diminuent la productivité. C'est pourquoi, il est indispensable de procéder après chaque cycle de polymérisation à un nettoyage approfondi des parois des réacteurs; ces nettoyages fréquents sont pénibles et coûteux. Par ailleurs, le croûtage qui évolue tout au long de la polymérisation perturbe de ce fait le bon déroulement de la polymérisation et rend plus difficile sa conduite.

Les polythiourées selon l'invention sont mises en oeuvre tout particulièrement pour la polymérisation en suspension aqueuse qui est la plus exigeante du point de vue de la propreté des parois du réacteur.

Pour éviter le croûtage des autoclaves de polymérisation, on peut soit revêtir les parois des réacteurs avec les polythiourées précitées, soit les incorporer dans le milieu de polymérisation.

Si l'on incorpore les polythiourées dans le milieu de polymérisation, la fréquence avec laquelle il faut effectuer ce traitement est fort variable et dépend notamment des conditions opératoires du traitement lui-même, des paramètres de la polymérisation, et de l'état de surface des parois.

Habituellement, les polythiourées sont mises en solution dans de l'eau et cette solution est pulvérisée sur les parois des réacteurs. Dans ce cas, la solution aqueuse de polythiourées contenant du chlorure de sodium, telle qu'obtenue par le procédé selon l'invention, peut être mise en oeuvre directement; il n'est pas nécessaire d'isoler ou de purifier la polythiourée. Cette solution aqueuse peut être pulvérisée par de l'air comprimé à froid sur les parois des réacteurs de polymérisation. Une autre méthode consiste à enduire les parois des réacteurs avec les polythiourées selon toute technique connue avant de procéder à une nouvelle polymérisation dans les réacteurs.

Les quantités de polythiourées selon l'invention à mettre en oeuvre peuvent varier dans une très large mesure, notamment en fonction de la nature des monomères et de l'état des surfaces internes des réacteurs utilisés. Lorsqu'on pulvérise la polythiourée, la quantité appliquée par unité de surface est habituellement comprise entre 200 et 1500 mg par m² et de préférence entre 700 et 1300 mg par m². Lorsqu'on introduit la polythiourée dans le milieu réactionnel, la quantité de polythiourée introduite est comprise habituellement entre 10 et 70 ppm par rapport au milieu réactionnel total ou 20 et 150 ppm par rapport au chlorure de vinyle dans ce cas particulier.

Les exemples suivants illustrent l'invention.

### Exemple 1

Dans un ballon de 2 l, équipé d'une ampoule à addition munie d'un robinet, d'un thermomètre, d'un agitateur et d'une électrode de pH mètre, on introduit 0,4 moles d'acide 3,5-diaminobenzène carboxylique et 200 ml d'une solution aqueuse 2M d'hydroxyde de sodium.

Tout en mélangeant, on ajoute progressivement 0,4 mole de thiophosgène par l'intermédiaire de l'ampoule à addition et le pH est maintenu à 8 par des additions régulières d'hydroxyde de sodium 5N.

La réaction est conduite à température ambiante et un refroidissement à l'eau est réalisé de manière à ne pas dépasser 30°C.

Après 45 minutes de réaction, on ajoute au mélange réactionnel de l'eau jusqu'à l'obtention d'un volume total de 2 l dont la teneur en polythiourée est de 5 %.

Le degré de polymérisation de la polythiourée obtenue est estimé à 14 par des dosages d'azote et de soufre.

### Exemple 2 et exemple 3R de comparaison

On utilise un réacteur de laboratoire en acier inoxydable de 3,5 litres de contenance, muni d'une double enveloppe, dans laquelle circule un fluide caloporteur, et équipé d'un agitateur à pales conventionnel en acier inoxydable.

Les surfaces internes du réacteur sont nettoyées par un lavage au moyen de tétrahydrofuranne suivi d'une pyrolyse réalisée par chauffage de la paroi à 400°C pendant 30 minutes. Le réacteur est ensuite poli à l'aide d'alumine 5 µm, puis rincé abondamment à l'eau déminéralisée.

Pour l'exemple 2, la solution aqueuse de polythiourée telle qu'obtenue à l'exemple 1 est appliquée sur les surfaces internes du réacteur par pulvérisation à l'air comprimé. La concentration mise en oeuvre est de 5,5 % en poids, le volume de solution utilisé est de 4,0 cc, ce qui correspond à une quantité de matières actives mises en oeuvre de 1470 mg/m². La pulvérisation est suivie d'un égouttage de l'excès puis d'un séchage à l'air à température ambiante. Pour l'exemple 3R, aucun agent anticroûtage n'est mis en oeuvre sur les surfaces internes du réacteur.

Le réacteur est refroidi à 15°C. On introduit successivement dans ce réacteur 1500 g d'eau déminéralisée, 0,726 g d'alcool polyvinylique. On met l'agitateur en marche (250 tr/min). Puis, on introduit 0,42 g de peroxydicarbonate de diéthyle. L'agitateur est arrêté.

On fait ensuite deux fois le vide dans le réacteur (à 133,3 mbar absolus) et entre les deux opérations, on balaie le réacteur à l'azote technique à la pression de 799,8 mbar absolus.

On introduit 1400 g de chlorure de vinyle sous une agitation de 500 tr/min.

On chauffe le milieu de polymérisation jusqu'à 58,5°C à la vitesse de 1°C par minute.

Après 45 min, on injecte 0,726 g d'alcool polyvinylique.

Après 3 heures, on introduit 300 g d'eau déminéralisée.

On maintient le milieu de polymérisation à 58,5°C sous agitation jusqu'à ce que la pression tombe de 3,5 bars.

On refroidit jusqu'à température ambiante.

On arrête la polymérisation par détente de la pression dans le réacteur.

Ensuite, on réalise un entraînement du chlorure de vinyle monomère résiduaire à la vapeur d'eau.

On observe ensuite l'état des surfaces internes du réacteur. Pour l'exemple 3R réalisé sans agent anticroûtage, les surfaces internes du réacteur sont recouvertes à 100 % de croûtage; pour l'exemple 2, seulement 5 à 10 % des surfaces internes ont été recouvertes par une mince couche de croûte.

## Revendications

1. Polythiourées de formule générale :
⁅NH-R-NH-CS⁆ₙ (A)
dans laquelle R représente un groupement aromatique substitué par au moins un groupement carboxyle et n représente un nombre entier compris entre 2 et 300.

2. Polythiourées selon la revendication 1 caractérisées en ce que R représente un groupement benzénique éventuellement substitué par un ou plusieurs groupements alkyles tels que le méthyle ou l'éthyle, et par un ou plusieurs groupements carboxyliques tels que -CO₂H, -CO₂Na ou -CO₂K.

3. Polythiourées selon la revendication 1 ou 2 caractérisées en ce qu'elles répondent à la formule suivante : 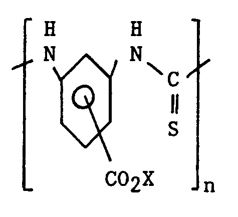 dans laquelle X représente un atome d'hydrogène ou un atome de sodium et n un nombre entier compris entre 2 et 100.

4. Polythiourées selon la revendication 3 caractérisées en ce qu'elles répondent à la formule suivante : 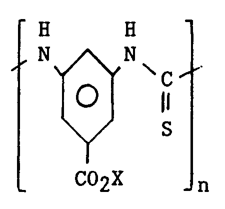 dans laquelle n représente un nombre entier compris entre 2 et 50.

5. Polythiourées selon la revendication 4, caractérisées en ce que n est un nombre entier compris entre 2 et 30.

6. Procédé pour la préparation des polythiourées selon l'une quelconque des revendications 1 à 5 caractérisé en ce que l'on fait réagir une diamine, de formule générale NH₂-R-NH₂, et le thiophosgène.

7. Utilisation des polythiourées selon l'une quelconque des revendications 1 à 5 pour éviter ou réduire le croûtage des réacteurs de polymérisation du chlorure de vinyle.

## Claims

1. Polythioureas of general formula:
-[NH-R-NH-CS-]ₙ (A)
in which R represents an aromatic group substituted by at least one carboxyl group and n represents an integer between 2 and 300.

2. Polythioureas according to Claim 1, characterised in that R represents a benzene group optionally substituted by one or more alkyl groups such as methyl or ethyl, and by one or more carboxylic groups such as -CO₂H, -CO₂Na or -CO₂K.

3. Polythioureas according to Claim 1 or 2, characterised in that they correspond to the following formula: 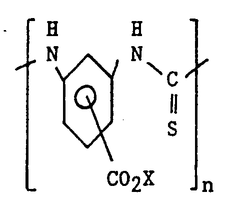 in which X represents a hydrogen atom or a sodium atom and n an integer between 2 and 100.

4. Polythioureas according to Claim 3, characterised in that they correspond to the following formula: 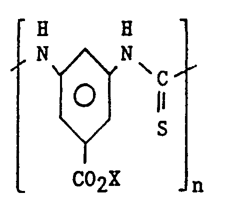 in which n represents an integer between 2 and 50.

5. Polythioureas according to Claim 4, characterised in that n is an integer between 2 and 30.

6. Process for the preparation of the polythioureas according to any one of Claims 1 to 5, characterised in that a diamine, of general formula NH₂-R-NH₂, and thiophosgene are reacted.

7. Use of the polythioureas according to any one of Claims 1 to 5, for preventing or reducing encrusting of reactors for the polymerisation of vinyl chloride.

## Patentansprüche

1. Polythioharnstoffe der allgemeinen Formel:
⁅ NH-R-NH-CS ⁆ₙ (A)
worin R eine durch wenigstens eine Carboxylgruppierung substituierte aromatische Gruppierung und n eine ganze Zahl zwischen 2 und 300 darstellt.

2. Polythioharnstoffe nach Anspruch 1, dadurch gekennzeichnet, daß R eine gegebenenfalls durch eine oder mehrere Alkylgruppierungen, wie Methyl oder Ethyl, und durch eine oder mehrere Carboxylgruppierungen wie -CO₂H, -CO₂Na oder -CO₂K substituierte Benzolgruppierung darstellt.

3. Polythioharnstoffe nach Anspruch 1 oder 2, dadurch gekennzeichnet, daß sie der folgenden Formel: 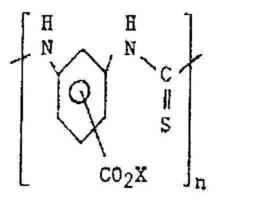 entsprechen, in der X ein Wasserstoffatom oder ein Natriumatom und n eine ganze Zahl zwischen 2 und 100 darstellt.

4. Polythioharnstoffe nach Anspruch 3, dadurch gekennzeichnet, daß sie der folgenden Formel: 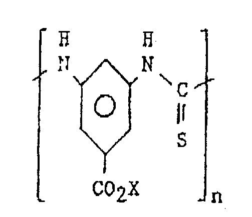 entsprechen, in der n eine ganze Zahl zwischen 2 und 50 darstellt.

5. Polythioharnstoffe nach Anspruch 4, dadurch gekennzeichnet, daß n eine ganze Zahl zwischen 2 und 30 ist.

6. Verfahren zur Herstellung von Polythioharnstoffen nach einem der Ansprüche 1 bis 5, dadurch gekennzeichnet, daß man ein Diamin der allgemeinen Formel NH₂-R-NH₂ und Thiophosgen reagieren läßt.

7. Verwendung der Polythioharnstoffe nach einem der Ansprüche 1 bis 5 zur Verhinderung oder Herabsetzung der Krustenbildung von Polymerisationsreaktoren des Vinylchlorids.
